Europäisches Patentamt

European Patent Office

Office européen des brevets

(11) Numéro de publication: **0 272 954 B1**

(12) **FASCICULE DE BREVET EUROPEEN**

(45) Date de publication de fascicule du brevet: **03.06.92** (51) Int. Cl.⁵: **H04M 17/02**

(21) Numéro de dépôt: **87402580.2**

(22) Date de dépôt: **17.11.87**

(54) **Dispositif d'initialisation de la taxation pour un poste téléphonique public.**

(30) Priorité: **18.11.86 FR 8616000**

(43) Date de publication de la demande:
**29.06.88 Bulletin 88/26**

(45) Mention de la délivrance du brevet:
**03.06.92 Bulletin 92/23**

(84) Etats contractants désignés:
**BE CH DE ES GB IT LI NL SE**

(56) Documents cités:
**DE-A- 2 051 238**
**US-A- 4 198 545**

(73) Titulaire: **SCHLUMBERGER INDUSTRIES**
**50, avenue Jean Jaurès**
**F-92120 Montrouge(FR)**

(72) Inventeur: **Barraud, Claude**
**7, rue de Solférino**
**F-75007 Paris(FR)**

(74) Mandataire: **Hasenrader, Hubert et al**
**Cabinet BEAU DE LOMENIE 55, rue d'Amster-**
**dam**
**F-75008 Paris(FR)**

## Description

La présente invention concerne un dispositif d'initialisation de la taxation téléphonique pour un poste téléphonique public.

La présente invention a pour objet une disposition particulière relative à des postes téléphoniques qui sont librement accessibles à des utilisateurs qui n'ont pas souscrit de contrat particulier pour l'utilisation de ce poste téléphonique. C'est ce qu'il faut entendre par "poste téléphonique public" dans le présent texte. Il peut s'agir de cabines téléphoniques installées sur la voie publique ou dans des lieux publics, de postes téléphoniques implantés dans des établissements commerciaux et mis à la disposition des clients de ces établissements etc....

Avec ce type de postes téléphoniques il est nécessaire que les utilisateurs ne puissent obtenir une communication téléphonique avec un interlocuteur que s'ils ont acquitté un certain montant de taxe, et que la communication téléphonique ne puisse avoir une durée qui exède le montant des taxes perçues. Pour ce faire ces postes téléphoniques peuvent être munis d'un système d'encaissement de pièces de monnaie qui décompte le montant introduit par l'usager dans la machine sous forme de pièce de monnaie. La communication téléphonique n'est autorisée que pour une durée correspondant au montant introduit dans la machine, ce montant pouvant, bien sur, être augmenté par l'utilisateur s'il veut prolonger la communication. Le document US-A-4 198 545 décrit un tel système. Ces postes téléphoniques peuvent être également équipés pour fonctionner avec des cartes de paiement. Dans ce cas le poste téléphonique est muni d'un "lecteur" de cartes qui permet de décrémenter le solde contenu dans la mémoire de la carte au fur et à mesure du déroulement de la communication téléphonique.

Quelque soit le mode de paiement considéré il est nécessaire que le poste téléphonique dispose des informations suivantes : début de la communication téléphonique, nombre d'unités consommées, valeur de l'unité consommée.

La fourniture au poste téléphonique de la première information soulève certaines difficultés. On définit en général comme début de la communication téléphonique, et donc comme début de la taxation, l'instant où le destinataire de la communication téléphonique décroche son combiné téléphonique. Pour définir l'instant du début de la taxation plusieurs systèmes ont été proposés :

En France, les postes téléphoniques publics sont reliés à un central téléphonique par des lignes spéciales. Le central téléphonique envoie au poste concerné une signalisation périodique qui donne le début de la taxation et le début de chaque unité de taxation. Le poste téléphonique gère ces signaux pour déterminer en permanence le montant de taxes dû.

Aux Etats Unis, les lignes dites à télétaxe n'existent pas. Toute l'opération est faite manuellement à partir d'une opératrice.

Dans d'autres pays, l'initialisation de la taxation est obtenue au niveau du poste téléphonique, en détectant l'inversion de polarité en ligne créée lorsque le destinataire de la communication décroche son combiné.

On voit donc que, dans les systèmes décrits précédemment, la définition de l'instant du début de la taxation dépend essentiellement du type du réseau téléphonique mis en place. Pour remédier à cet inconvénient on a proposé d'équiper les postes téléphoniques publics de circuits capables de traiter le signal électrique reçu pour distinguer dans ce signal la partie correspondant à la sonnerie du poste appelé et la partie correspondant à la voix du destinataire de la communication. Cependant de tels systèmes de traitement du signal sont complexes et peu fiables.

Un objet de l'invention est de fournir un dispositif d'initialisation de la taxation téléphonique qui soit, d'une part, adaptable à tous les types de réseaux téléphoniques et qui, d'autre part, soit fiable et d'un coût réduit.

Pour atteindre ce but, selon l'invention, le dispositif d'initialisation de la taxation téléphonique se caractérise en ce qu'il comprend:

- des moyens pour interdire le fonctionnement du microphone du combiné dudit poste téléphonique, des premiers moyens de commande pour inhiber lesdits moyens d'interdiction,
- des moyens de brouillage pour ne laisser arriver à l'écouteur du combiné que le signal correspondant à la sonnerie de retour et pour brouiller le signal correspondant à la voix humaine ; des deuxièmes moyens de commande pour inhiber lesdits moyens de brouillage et
- des moyens actionnables par l'usager dudit poste téléphonique, l'actionnement desdits moyens d'une part activant lesdits premiers et deuxièmes moyens de commande pour inhiber lesdits moyens d'interdiction et lesdits moyens de brouillage, et d'autre part commandant l'initialisation de la taxation.

On comprend qu'ainsi le système est très fiable et très simple et que son efficacité est totale puisque, si l'usager oublie d'agir sur les moyens d'actionnement manuel, par exemple un simple bouton, il ne pourra rien comprendre aux paroles de son correspondant et il ne pourra pas lui-même parler et, qu'en revanche, dès que l'usager a agi sur l'actionneur manuel, la taxation démarre.

D'autres caractéristiques et avantages de l'invention apparaîtront plus clairement à la lecture de la description qui suit de plusieurs modes de mise en oeuvre de l'invention donnés à titre d'exemples non limitatifs. La description se réfère au dessin annexé sur lequel :

La figure 1 montre un poste téléphonique public muni d'un dispositif d'initialisation de la taxation selon un premier mode de réalisation de l'invention, et

La figure 2 un poste téléphonique public muni d'un dispositif d'initialisation de la taxation selon un deuxième mode de mise en oeuvre de l'invention.

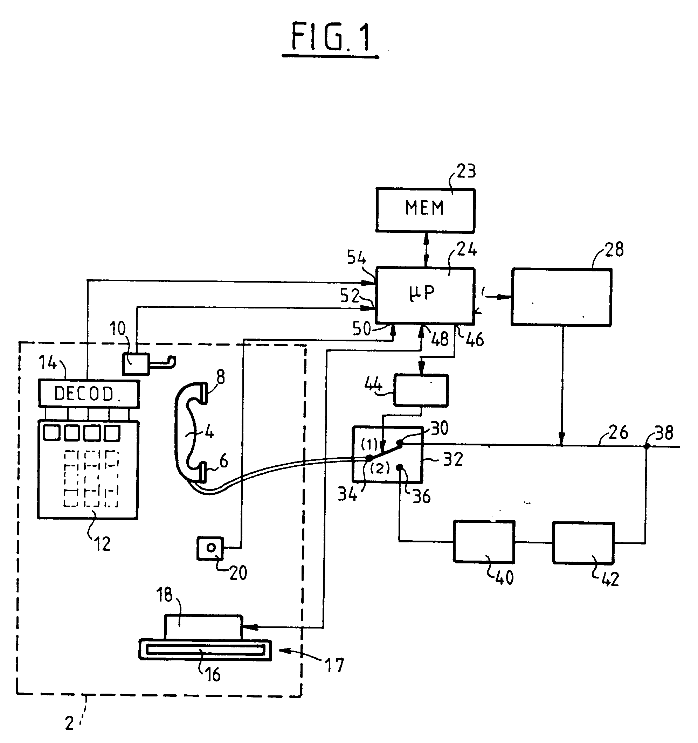

La figure 1 montre de façon schématique un poste téléphonique public 2 comprenant un combiné 4 avec son microphone 6 et son écouteur 8. Le combiné 4 est associé à un système d'accrochage 10 qui délivre un signal S dès que le combiné 4 est décroché. Le poste 2 comprend également un clavier 12 de type classique ou un cadran, associé à un décodeur 14, et un lecteur de cartes à mémoire 17 dont on a représenté la fente d'introduction 16, ainsi que la tête de lecture/écriture 18. On a enfin fait figurer un bouton à commande manuelle 20 dont la fonction sera explicitée ultérieurement.

Le poste téléphonique comporte également des circuits électroniques de traitement parmi lesquels on a fait apparaître un microprocesseur 24 associé à une mémoire 23. Enfin on a représenté sur la figure 1 la ligne téléphonique 26 avec son circuit de gestion de ligne 28.

La ligne 26 est raccordée à la borne 30 d'un commutateur à deux positions 32. Le point commun 34 du commutateur 30 est relié au combiné 4. La deuxième borne 36 du commutateur 32 est reliée à un point 38 de la ligne 26 par un circuit 40 d'inhibition du microphone 6 et un circuit de brouillage 42 , ces deux circuits étant montés en série. Le commutateur 32 est associé à un circuit de commande 44 qui permet de placer le commutateur dans une des deux positions repérées par (1) et (2) sur la figure.

Le microprocesseur 24 est bien sûr relié à sa mémoire 23. La mémoire 23 contient des données relatives notamment à la taxation de la communication, et des instructions pour permettre notamment le déroulement des étapes qui vont être décrites ci-après. Le microprocesseur est relié par sa borne de sortie 46 au circuit de commande 44 du commutateur 32. Les entrées/sorties 48 sont reliées au circuit de lecture/écriture 18 du lecteur de cartes 17. Le bouton poussoir 20, le circuit de décrochage 10 et le décodeur 14 du clavier 12 sont respectivement reliés aux entrées 50, 52 et 54 du microprocesseur 24.

Lorsque le poste téléphonique est au repos,c'est à dire lorsque le combiné est accroché, le commutateur 32 est dans la position (2), c'est-à-dire que le point commun 34 est relié à la borne 36. Dans ces conditions le combiné 4 est relié à la ligne téléphonique 26 par l'intermédiaire du circuit de brouillage 42 et du circuit 40 d'inhibition du microphone. Les circuits 40 et 42 seront décrits plus en détails ultérieurement.

Il suffit, à ce stade de la description de préciser que le circuit 40 lorsqu'il est activé, fait que le signal électrique délivré par le microphone 6 du combiné n'est pas appliqué à la ligne 26 et que le circuit 42 fait que le signal de sonnerie arrivant sur la ligne 26 est intégralement transmis à l'écouteur 8 alors que le signal correspondant à la voix humaine est brouillé et le son correspondant délivré par l'écouteur est incompréhensible pour l'usager.

Lorsqu'un utilisateur soulève le combiné 4, le circuit 10 délivre un signal S qui provoque l'activation de l'ensemble du microprocesseur 24, et le microprocesseur 24 vérifie que le commutateur 32 est bien dans la position (2). Dans le cas contraire le microprocesseur commande le circuit 44 pour placer effectivement le commutateur 32 dans cette position. En conséquence les circuits 40 et 42 sont inséréset activés.

Puis l'usager introduit sa carte dans la fente d'introduction 16 du lecteur de cartes. Cette opération déclenche une succession de contrôles bien connus dans les machines commandées par des cartes à savoir : vérification de l'authenticité de la carte; et vérification du fait qu'il existe encore un solde disponible dans la mémoire de la carte. Lorsque ces vérifications ont été effectuées l'usager tape, à l'aide du clavier 12, le numéro du poste téléphonique qu'il veut appeler. Dès que l'usager compose le premier chiffre du numéro le décodeur 14 envoie un signal spécifique au microprocesseur 24.. Cette information décodée par le circuit 14 est transmise au microprocesseur 24. Le microprocesseur exploite ces données pour déterminer, à partir des tables de taxation stockées dans la mémoire 23, le coût de l'unité de communication téléphonique et la durée de cette unité. Cette information est également transmise au circuit 28 de gestion de ligne. La connexion est établie avec le poste appelé.

Comme le circuit 42 laisse passer le signal de sonnerie, l'usager appelant entend celle-ci. Si l'usager appelé décroche son combiné et parle, l'usager appelant entend que la sonnerie a cessé mais il ne peut comprendre ce que dit son interlocuteur en raison du circuit 42. En outre il ne peut parler puisque le circuit 40 d'inhibition est actif. Il doit alors, comme il y est invité par la notice explicative de l'appareil, appuyer sur le bouton 20. Le signal ainsi délivré est appliqué au microprocesseur 24 qui, en retour, envoie un signal de commande au circuit 44 pour mettre le commutateur 32 dans la position (1). Simultanément le signal délivré par le bouton 20 initialise le calcul de la taxation c'est à dire le décompte des unités consommées.. Comme le commutateur 32 est dans la position (1), le signal téléphonique arrive directement au combiné 4 sans passer par les circuits 40 et 42. Les deux interlocuteurs peuvent donc communiquer normalement. Le microprocesseur 24 calcule les montants successifs de taxe à acquiter au fur et à mesure du déroulement de la communication téléphonique et commande périodiquement le tête de lecture/écriture 18 pour décrémenter le solde inscrit dans la mémoire de la carte.

A la fin de la communication téléphonique l'usager raccroche le combiné. Le circuit 10 délivre un signal qui définit la fin de la période de taxation. En outre, en réponse à ce signal, le microprocesseur envoie un signal au circuit de commande du commutateur 32 pour que celui-ci revienne dans sa position (2). Le signal délivré par le circuit 10 commande en suite la mise en "stand by" du microprocesseur 24. L'usager peut alors retirer sa carte de la fente 16.

De préférence le circuit 40 est un filtre complet vis-à-vis du signal délivré par le microphone 6. De préférence également le circuit de brouillage 42 est un filtre passe-bande centré sur 400 Hz. Au delà de la bande 350-450Mz, le filtre présente une atténuation de 48dB par octave. Ainsi ce filtre laisse passer les signaux ayant des fréquences correspondant à celles d'une sonnerie, mais il affaiblit considérablement les signaux correspondant à la voix humaine dont la fréquence se situe à environ 800 Hz.

Selon un mode perfectionné de réalisation du dispositif d'initialisation de la figure 1, le microprocesseur 24 introduit une courte temporisation (quelques secondes) entre l'apparition du signal délivré par le bouton 20 et le début effectif de la facturation. Cette temporisation mise en oeuvre par le microprocesseur, a pour but d'éviter que l'usager ne soit facturé dans certains cas particuliers où il y a décrochement d'un combiné et émission d'un signal vocal qui ne correspond pas au poste appelé par l'usager. Cette situation se présente par exemple pour un appel international dans le cas où le standard décroche et transmet sur la ligne un signal vocal pré-enregistré pour informer l'usager que la ligne est encombrée etc.. En effet, lors du début du signal vocal celui-ci est brouillé par le circuit 42. L'usager ne peut se rendre compte qu'il s'agit d'un disque que lorsqu'il a appuyé sur le bouton 20 pour supprimer le brouillage. Grâce à la temporisation l'usager a le temps de constater qu'il s'agit d'un message pré-enregistré. Il dispose d'un temps égal à la temporisation pour raccrocher le combiné 4 sans qu'il y ait facturation. En effet lorsque l'usager appelant raccroche le combiné, le circuit 10 délivre un signal arrêtant la taxation.

Cependant si la communication est établie, en appuyant sur le bouton 20, la durée de la temporisation est facturée à l'usager.

Selon encore un autre perfectionnement le signal de décrochement S délivré par le circuit 10 initialise une deuxième temporisation, par exemple, de deux minutes. Si durant ce lapse de temps l'usager n'a pas appuyé sur le bouton 20, la liaison téléphonique est automatiquement interrompue. Cette disposition a pour but d'éviter qu'un usager mal intentionné ne s'amuse à ne pas appuyer sur le bouton 20 même après que l'interlocuteur ait décroché son combiné.

Dans la description précédente, on a envisagé le cas où l'usager paie la taxe téléphonique à l'aide d'une carte. Il va de soi qu'on ne sortirait pas de l'invention si la taxe était payée à l'aide de pièces de monnaie. Le circuit de la figure unique ne serait modifié que par le remplacement du lecteur de cartes 17 par un sélecteur de pièces.

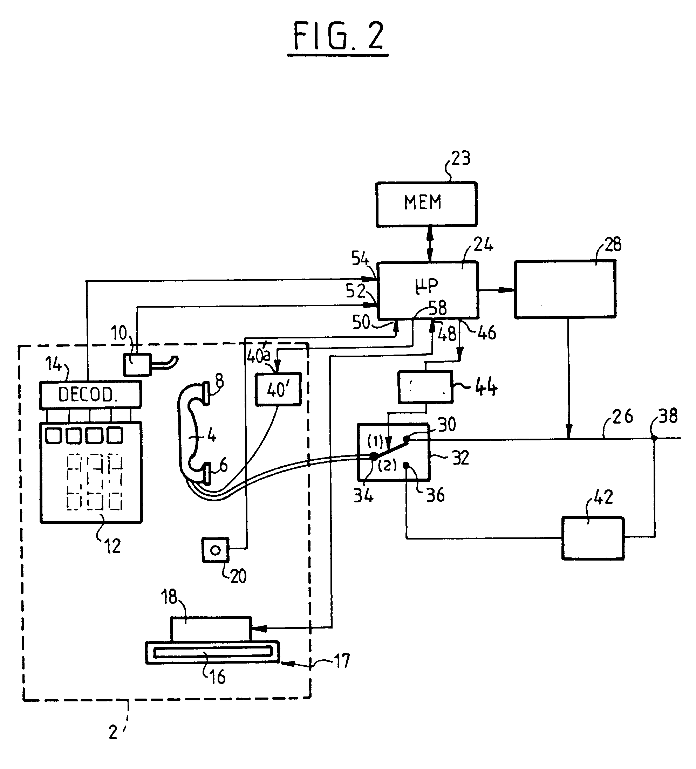

La figure 2 montre une variante de réalisation du système d'initialisation de la taxation selon l'invention. La seule différence réside dans le mode de montage du circuit d'inhibition du microphone 6. Le circuit 40 de la figure 1 est supprimé et remplacé par un circuit 40′ qui agit directement sur le microphone 6 pour en inhiber l'effet. Le circuit 40′ comporte une entrée de commande 40′a qui permet d'activer l'inhibition du microphone à la réception d'un signal de commande. L'entrée de commande 40′a du circuit 40′ est reliée à la sortie 58 du microprocesseur 24.

Le fonctionnement du système de la figure 2 ne diffère de celui de la figure 1 que par les points suivants : Lorsque l'usager décroche le combiné 4, le microphone 6 est inhibé par le circuit 40′et le circuit de brouillage 42 est actif. Lorsque l'usager compose avec le clavier 12 le premier chiffre du numéro qu'il veut appeler, le décodeur 14 envoie au microprocesseur 24 un signal spécifique.. Lorsque l'usager appuie sur le bouton 20, cela provoque, en plus de ce qui a déjà été décrit, la désactivation du circuit 40′. Le microphone 6 fonctionne donc à nouveau normalement.

Il découle de la description précédente que le dispositif d'initialisation de la taxation répond bien au problème posé. Le début de la taxation ne fait nullement intervenir les signaux arrivant au poste téléphonique. Il est uniquement défini à partir de l'instant où l'usager appuie sur le bouton 20. Les circuits qui obligent l'usager à appuyer sur le bouton 20 en déclenchant en même temps le début de la taxation sont très simples et d'un fonctionnement très fiable puisqu'il s'agit d'une part d'un commutateur et d'autre part, d'un filtre complet et d'un filtre passe-bande de caractéristiques courantes.

**Revendications**

1. Dispositif pour initialiser la taxation téléphonique pour un poste téléphonique public caractérisé en ce qu'il comprend :

des moyens (40, 40') pour interdire le fonctionnement du microphone du combiné dudit poste téléphonique ;

des premiers moyens de commande (32, 44, 24) pour inhiber lesdits moyens d'interdiction,

des moyens de brouillage (42) pour ne laisser arriver à l'écouteur du combiné que le signal correspondant à la sonnerie d'appel et pour brouiller le signal correspondant à la voix humaine,

des deuxièmes moyens de commande (32, 44) pour inhiber lesdits moyens de brouillage (42) ; et

des moyens (20) actionnables par l'usager dudit poste téléphonique, l'actionnement desdits moyens d'une part activant lesdits premiers et deuxièmes moyens de commande pour inhiber lesdits moyens d'interdiction et lesdits moyens de brouillage et d'autre part commandant l'initialisation de la taxation.

2. Dispositif selon la revendication 1, caractérisé en ce que les moyens d'interdiction de fonctionnement comprennent un filtre complet (40) sur le signal délivré par le microphone et en ce que les moyens de brouillage comprennent un filtre passe bande centré sur 400Hz.

3. Dispositif selon l'une quelconque des revendications 1 et 2 caractérisé en ce que lesdits premiers et deuxièmes moyens de commande comprennent des moyens de commutation (32) pour relier ledit combiné (4) à la ligne téléphonique (26) soit directement, soit par l'intermédiaire desdits moyens d'interdiction de fonctionnement (40) et desdits moyens de filtrage (42) montés en série, et des moyens (40a) pour rendre actifs lesdits moyens d'interdiction de fonctionnement.

4. Dispositif selon l'une quelconque des revendications 1 à 3, caractérisé à ce qu'il comprend en outre des moyens pour introduire un délai entre l'instant d'actionnement par l'usager desdits moyens actionnables (20) et le début effectif de la facturation de la communication téléphonique.

5. Dispositif selon l'une quelconque des revendications 1 à 4, caractérisé en ce qu'il comprend en outre des moyens pour introduire une temporisation déclanchée lorsque l'usager appelant décroche le combiné (4), la communication téléphonique étant interrompue à la fin de ladite temporisation si l'usager n'a pas encore actionné lesdits moyens (20) actionnables par l'usager.

## Claims

1. Device for initiating the call metering for a public telephone, characterised in that it comprises means (40, 40') for inhibiting the operation of the microphone of the handset of the said public telephone, first control means (32, 44, 24) for disabling the said inhibiting means, scrambling means (42) for allowing only the signal corresponding to the ringing bell to arrive at the earpiece of the handset and for scrambling the signal corresponding to the human voice, second control means (32, 44) for disabling the said scrambling means (42) and means (20) operable by the user of the said public telephone, the operation of the said means, on the one hand, activating the said first and second control means for disabling the said inhibiting means and the said scrambling means and, on the other hand, initiating the metering.

2. Device according to claim 1, characterised in that the operation inhibiting means comprise a complete filter (40) with respect to the signal delivered by the microphone and in that the scrambling means comprise a bandpass filter centred on 400 Hz.

3. Device according to either of claims 1 and 2, characterised in that the said first and second control means comprise switching means (32) for connecting the said handset (4) to the telephone line (26) either directly or by way of the said operation inhibiting means (40) and the said filtering means (42) arranged in series, and means (40a) for activating the said operation inhibiting means.

4. Device according to any one of claims 1 to 3, characterised in that it moreover comprises means for introducing a delay between the moment of operation of the said operable means (20) by the user and the actual commencement of the billing of the telephone call.

5. Device according to any one of claims 1 to 4, characterised in that it moreover comprises means for introducing a time-delay triggered when the caller lifts the handset (4), the telephone connection being broken at the end of the said time-delay if the user has not yet operated the said means (20) operable by the user.

**Patentansprüche**

1. Einrichtung zum Initialisieren der Telefongebührenberechnung für ein öffentliches Telefon, dadurch gekennzeichnet, daß sie umfaßt:

    Mittel (40, 40') zum Sperren der Funktion des Mikrofons des Telefon-Handapparates;

    erste Steuermitteln (32, 44, 24) zum Blokkieren der Sperrmittel,

    Störungsmittel (42), damit am Hörer des Handapparates nur das dem Klingeln entsprechende Signal ankommt und das der menschlichen Stimme entsprechende Signal gestört wird,

    zweite Steuermittel (32, 44) zum Blockieren der Störungsmittel (42); und

    Mittel (20), die vom Benutzer des Telefons betätigbar sind, wobei die Betätigung dieser Mittel einerseits die ersten und die zweiten Steuermittel zum Blokkieren der Sperrmittel und der Störungsmittel aktiviert und andererseits die Initialisierung der Gebührenberechnung steuert.

2. Einrichtung gemäß Anspruch 1, dadurch gekennzeichnet, daß die Funktionssperrmittel für das vom Mikrofon ausgegebene Signal ein Vollfilter (40) umfassen und daß die Störungsmittel ein bei 400 Hz zentriertes Bandpaßfilter umfassen.

3. Einrichtung gemäß einem der Ansprüche 1 und 2, dadurch gekennzeichnet, daß die ersten und die zweiten Steuermittel Umschaltmittel (32) umfassen, um den Handapparat (4) entweder direkt oder über die in Reihe geschalteten Funktionssperrmittel (40) und Filtermittel (42) und über Mittel (40a), die die Funktionssperrmittel im aktiven Zustand belassen, mit der Telefonleitung (26) zu verbinden.

4. Einrichtung gemäß einem der Ansprüche 1 bis 3, dadurch gekennzeichnet, daß sie außerdem Mittel zum Einführen einer Verzögerung zwischen dem Moment der Betätigung der Betätigungsmittel (20) durch den Benutzer und dem tatsächlichen Anfang der Berechnung der Telefonverbindung aufweist.

5. Einrichtung gemäß einem der Ansprüche 1 bis 4, dadurch gekennzeichnet, daß sie außerdem Mittel zum Einführen einer Verweilzeit umfaßt, die zu laufen beginnt, wenn der anrufende Benutzer den Handapparat (4) abnimmt, wobei die Telefonverbindung am Ende der Verweildauer unterbrochen wird, wenn der Benutzer die vom Benutzer betätigbaren Mittel (20) noch nicht betätigt hat.

# FIG.1

# FIG. 2